# EUROPEAN PATENT APPLICATION

(11) **EP 4 830 521 A1**
(43) Date of publication of application: **28.10.2026**
(21) Application number: 26168003.7
(22) Date of filing: 26.03.2026
(51) Int. Cl.: A21C 11/16, A23P 30/20

(54) **DIE FOR THE EXTRUSION OF A DOUGH OF FOOD PRODUCTS SUCH AS PASTA, SNACKS OR PET FOOD**

(30) Priority: 07.04.2025 IT 202500007485
(71) Applicant: Pavan S.p.A., 35015 Galliera Veneta (PD) (IT)
(72) Inventor: CATTAI, Mattia, 31100 TREVISO (IT); BASSO, Sergio, 31033 CASTELFRANCO VENETO (TREVISO) (IT); DI NUNNO, Davide, 31033 CASTELFRANCO VENETO (TREVISO) (IT); SCAPIN, Diego, 35010 SAN GIORNIO IN BOSCO (PADOVA) (IT)
(74) Representative: Dondi, Silvia

(57) **Abstract**

A die (1) for the extrusion of a dough of food products such as pasta, snacks or pet food, comprising:
at least one die insert (4) partly accommodated in one through hole (3) and adjustable in position; said die insert (4) comprising:
- a hollow insert body (41) having a longitudinal channel (42) developing through the insert body (41) from an inlet (42a) to an outlet (42b);
- a head portion (411) integrally fixed to the insert body (41) and located upstream of the insert body (41) with respect to an advancing direction of the dough, the head portion (411) being arranged in said at least one through hole (3), said head portion (411) being configurable in at least a first position in which it is distanced from internal walls (21) of the die body (2) delimiting the through hole (3) and thus a gap (5) is obtained between the head portion (411) and the internal walls (21), and a second position in which the head portion (411) abuts the internal walls (21) of the die body (2).

## Description

The present invention relates to a die for the extrusion of a dough of food products such as pasta, snacks or pet food.

As known, the extrusion process involves pushing a dough through a die. In the die, which is usually circular or rectangular in shape, there are holes with inserts of a specific geometry to give the final product a specific shape.

Deviations in product speed among the inserts degrade the overall quality of the final products, thus increasing the scraps.

In some known solutions, filters and/or special perforated plates may be provided upstream of the die to equalize the speed profile of the dough. Drilling the plates and choosing the right compensating plate requires special attention and sometimes it is difficult to have a well-compensated die. In extreme cases, it is necessary to plug some holes in the die in order to have proper dough flow.

One drawback of these solutions resides in burdensome operations of format change and/or maintenance of the compensating plates. In particular, when a modification of the dimensions of holes is requested, the extrusion process shall be interrupted, thus causing production downtimes. In some applications even the die shall be removed for changing the compensating plates.

In addition, compensating plates requires more space, which may be an issue in some arrangements.

In this context, the technical task at the basis of the present invention is to propose a die for the extrusion of a dough of food products such as pasta, snacks or pet food, which overcome the problems of the prior art cited above.

In particular, the object of the present invention is to provide a die for the extrusion of a dough of food products such as pasta, snacks or pet food, which is able to equalize the speed profile of the dough in an easier and quicker way than the prior art solutions.

Another object of the present invention is to propose a die for the extrusion of a dough of food products such as pasta, snacks or pet food, which is more compact and structurally simpler than the prior art solutions.

The stated technical task and specified aims are substantially achieved by a die for the extrusion of a dough of food products such as pasta, snacks or pet food, comprising:
a die body having at least one through hole with a main development axis;
at least one die insert partly accommodated in said at least one through hole and adjustable in position along a direction substantially parallel to the main development axis;
said at least one die insert comprising:
   - a hollow insert body having a longitudinal channel developing through the insert body from an inlet to an outlet;
   - a head portion integrally fixed to the insert body and located upstream of the insert body with respect to an advancing direction of the dough,
the head portion being arranged in said at least one through hole, said head portion being configurable in at least a first position in which it is distanced from internal walls of the die body delimiting the through hole and thus a gap is obtained between the head portion and the internal walls, and a second position in which the head portion abuts the internal walls of the die body leading to a change in the flow of dough into the die insert.

According to one embodiment, the die insert is adjustable in position by means of a tool operated by an operator.

According to one embodiment, the die insert is screwed in the through hole. The die insert is adjustable in position by screwing/unscrewing it. In particular, adjustable in position means adjustable along a direction substantially parallel to the main development axis.

According to one embodiment, the die comprises locking means for locking the die insert in position. The locking means are configurable in at least an operating position in which they prevent the adjustment of the die insert along a direction substantially parallel to the main development axis, and a rest position in which they are disengaged from the die insert and allow said adjustment.

According to one embodiment, the locking means comprises a lock nut externally screwed to the insert body.

According to one embodiment, the die insert is adjustable in a first limit position in which the gap reaches its maximum value. The die insert comprises a stop ring externally fixed to the insert body so that, in the first limit position, it abuts a fixed component of the die.

According to one embodiment, the head portion comprises an upper surface which develops with a sloping from the middle towards the border. According to one embodiment, the head portion comprises a lateral surface having convergent development towards the insert body.

The stated technical task and specified aims are substantially achieved by an extrusion plant, comprising:
a die according to what is described;
a feeding channel for feeding the dough to the die.

The stated technical task and specified aims are substantially achieved by a pasta, snacks or pet food production line, comprising an extrusion plant according to what is described.

Further characteristics and advantages of the present invention will more fully emerge from the non-limiting description of a preferred but not exclusive embodiment of a die for the extrusion of a dough of food products such as pasta, snacks or pet food, as illustrated in the accompanying drawings, in which:

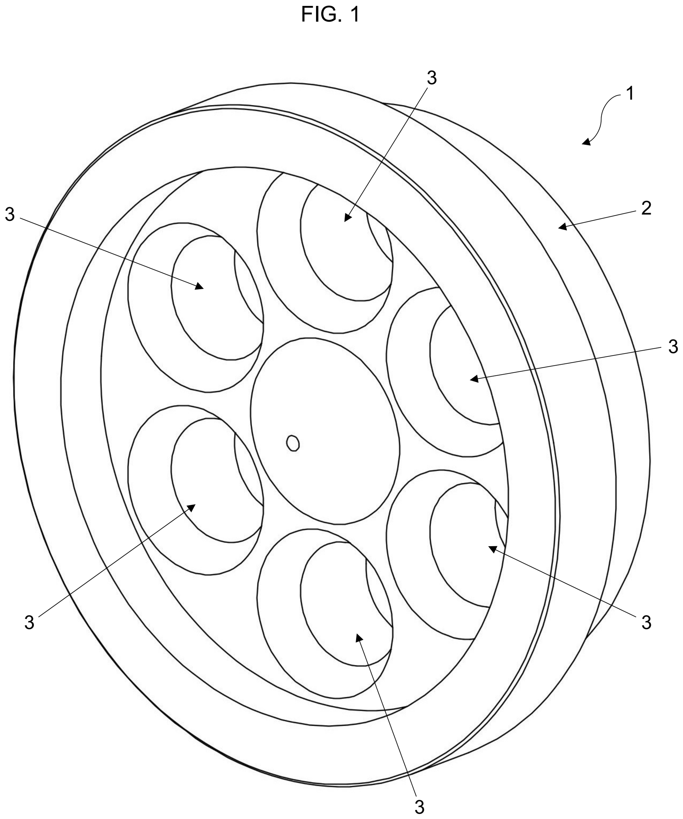

- figures 1-3 illustrate a die for the extrusion of a dough of food products such as pasta, snacks or pet food, according to the present invention, in a perspective view, a bottom view and a side view, respectively;

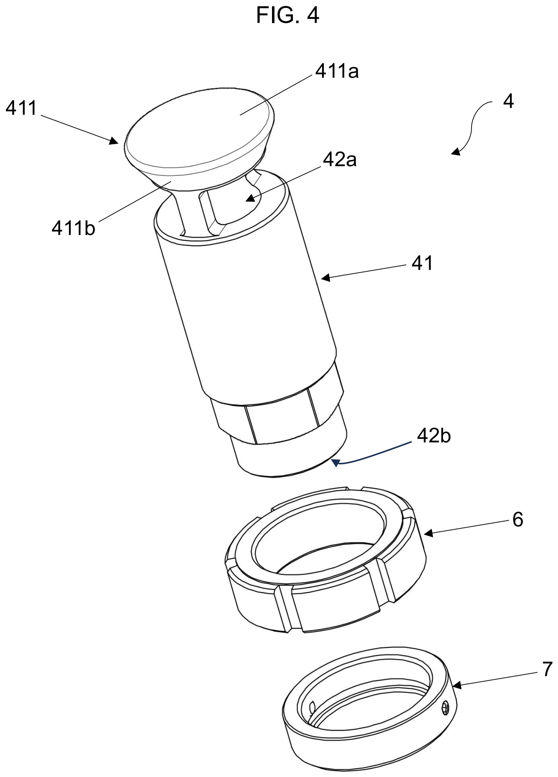

- figure 4 illustrates an exploded perspective view of a part (die insert) of the die of figures 1-3;

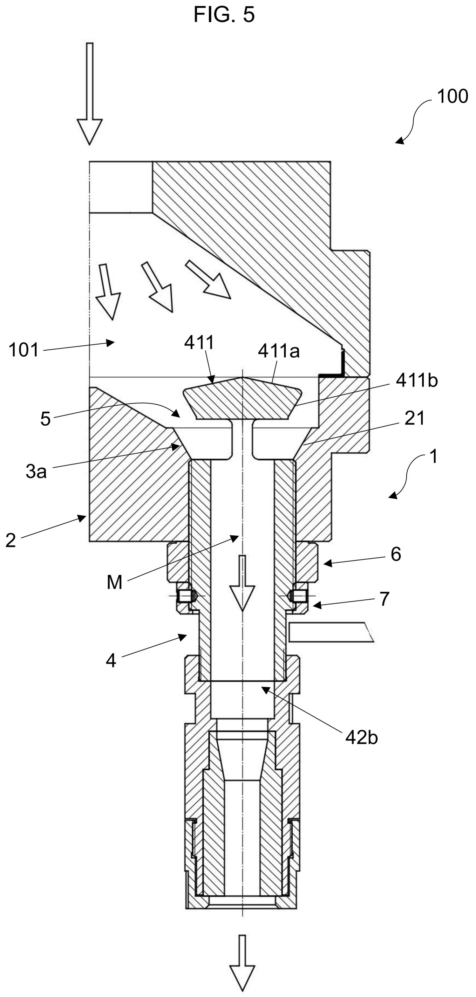

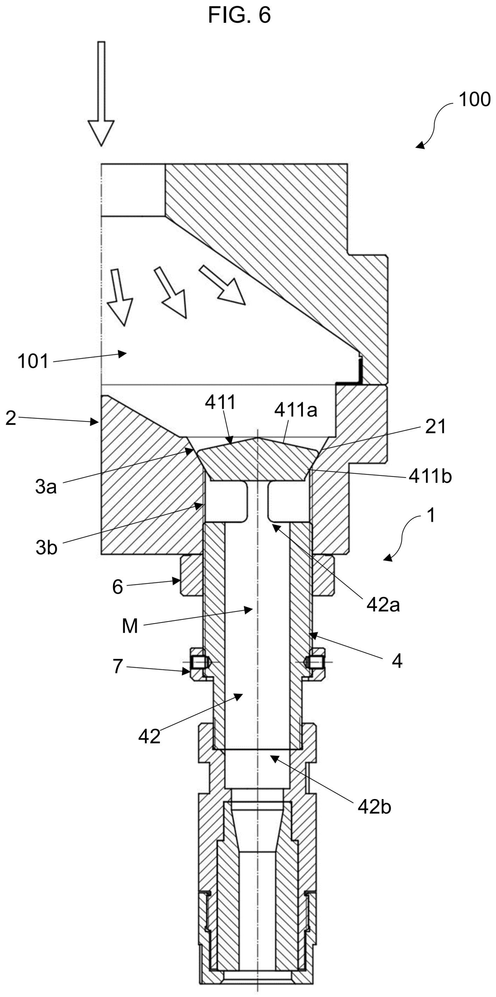

- figures 5 and 6 illustrate a sectional view of a part of an extrusion plant, according to the present invention, with the head portion of the die insert configured in a first position and a second position, respectively.

With reference to the figures, number 1 denotes a die for the extrusion of a dough of food products such as pasta, snacks or pet food.

The die 1 comprises a die body 2 having at least one through hole 3. The through hole 3 has a main development axis "M".

Preferably, the die body 2 has a plurality of through holes 3.

The die 1 comprises at least one die insert 4. The die insert 4 is partly accommodated in the through hole 3.

The die insert 4 is adjustable in position along a direction substantially parallel to the main development axis "M".

Preferably, the die 1 comprises a plurality of die inserts 4. In particular, a die insert 4 is accommodated in each through hole 3.

The die insert 4 comprises a hollow insert body 41 having a longitudinal channel 42 developing through the insert body 41 from an inlet 42a to an outlet 42b.

Optionally, it is possible to mount additional insert part to the insert body 41 at the outlet 42b for the definition of the extruded product.

According to the illustrated embodiment, the insert body 41 is substantially cylindrical. However, the shape of the insert body 41 is not relevant as long as it is possible to fit the die insert 4 into the corresponding hole 3.

In particular, the inlet 42a is a dough receiving end. In particular, the outlet 42b is a discharge end for an extruded dough.

Appropriately, the inlet 42a is upstream of the outlet 42b with respect to an advancing direction of the dough.

Preferably, the inlet 42a and the outlet 42b are located at opposite sides of the insert body 41.

Preferably, the longitudinal channel 42 develops according to prevailing direction which is substantially parallel to the main development axis "M".

Preferably, the longitudinal channel 42 and the main development axis "M" are coaxial.

Preferably, the longitudinal channels 3 are more than one. The choice is dependent on the food product to be produced and the desired shape and the flow rate. Preferably, the longitudinal channels 3 are in communication with each other.

In other words, the longitudinal channels are extrusion holes.

The die insert 4 comprises a head portion 411 integrally fixed to the insert body 41 and located upstream of the insert body 41 with respect to an advancing direction of the dough.

Preferably, the head portion 411 is located upstream of the inlet 42a of the longitudinal channel 42 with respect to an advancing direction of the dough.

Preferably, the head portion 411 is held at a distance from the inlet 42a.

According to one embodiment, the head portion 411 is mounted to the insert body 41.

According to an alternative embodiment, the head portion 411 and the insert body 41 are obtained in a single piece.

The head portion 411 is arranged in the through hole 3 and configurable in at least a first position in which it is distanced from internal walls 21 of the die body 2 delimiting the through hole 3 and thus a gap 5 is obtained between the head portion 411 and the internal walls 21, and a second position in which the head portion 411 abuts the internal walls 21 of the die body 2.

This leads to a change in the flow of product into the die insert 4 and consequently in the speed of the product output. Specifically, a higher inlet feed rate corresponds to a higher output product speed.

According to one embodiment, illustrated in figures, the through hole 3 comprises a first portion 3a and a second portion 3b. The second portion 3b is arranged downstream of the first portion 3a with respect to an advancing direction of the dough.

The insert body 41 is partly accommodated in the housing portion 3b and the internal walls 21 which defines the gap 5 are internal walls of the first portion 3a. In other words, the gap 5 is defined with a part of through hole 3 which does not accommodate the insert body 41.

According to the illustrated embodiment, the gap 5 is annular.

According to one embodiment, the die insert 4 is adjustable in position by means of a tool operated by an operator.

Preferably, the tool acts on the insert body 41 to adjust the position of the die insert 4.

According to the illustrated embodiment, the die insert 4 is screwed in the through hole 3. Therefore, the die insert 4 is adjustable in position by screwing or unscrewing it with respect to the through hole 3.

Preferably, the insert body 41 is screwed to the second portion 3b.

Preferably, the die insert 4 partly protrudes from the through hole 3, in particular downstream of it. The tool acts on the protruding part.

According to one embodiment, the die 1 comprises locking means 6 for locking the die insert 4 in position, configurable in at least an operating position in which they prevent the die insert 4 from changing its position, and a rest position in which they are disengaged from the die insert 4 and allow the adjustment of the die insert 4 along a direction substantially parallel to the main development axis "M".

When the die insert 4 partly protrudes from the through hole 3, the locking means 6 acts on the protruding portion. In other words, the locking means 6 acts on the protruding portion of the die insert 4 from the through hole 3. Preferably, as illustrated in figures, the locking means 6 comprise a lock nut (indicated with the same reference number 6) externally screwed to the insert body 41.

Preferably, the die insert 4 is adjustable in a first limit position in which the gap 5 reaches its maximum value (thus corresponding to a condition of maximum feeding for the die insert 4). The second position already mentioned above, in which the head portion 411 abuts the internal walls 21 of the die body 2, corresponds to a second limit position, in which the gap 5 reaches its minimum value (zero).

Preferably, the die insert 4 comprises a stop ring 7 externally fixed to the insert body 41 so that in the first limit position it abuts a fixed component of the die 1, for example the die body 2. This prevents the die insert 4 to move beyond such position.

When the lock nut 6 is present, in the first limit position the stop ring 7 abuts the lock nut 6.

According to one embodiment, the head portion 411 comprises an upper surface 411a which develops with a sloping from the middle towards the border. In other words, the upper surface 411a has conic development. More in details, the upper surface 411a is the lateral surface of a cone pointing upward.

This reduces the risk of product stagnation and allows an easier cleaning.

According to one embodiment, the head portion 411 comprises a lateral surface 411b having convergent development in a direction towards the insert body 41. In other words, the lateral surface 411b is a lateral surface of a truncated cone facing downward.

Preferably, the lateral surface 411b defines the passage gap 5 with the feeding portion 3a.

Preferably, the feeding portion 3a comprises a lateral surface having convergent development towards the housing portion 3b. In other words, the lateral surface is a lateral surface of a truncated cone facing downward.

Preferably, the lateral surface 411b and the feeding portion 3a are countershaped.

According to the illustrated embodiment, the head portion 411 comprises an upper portion being a cone pointing upward and a lower portion being a truncated cone pointing downward.

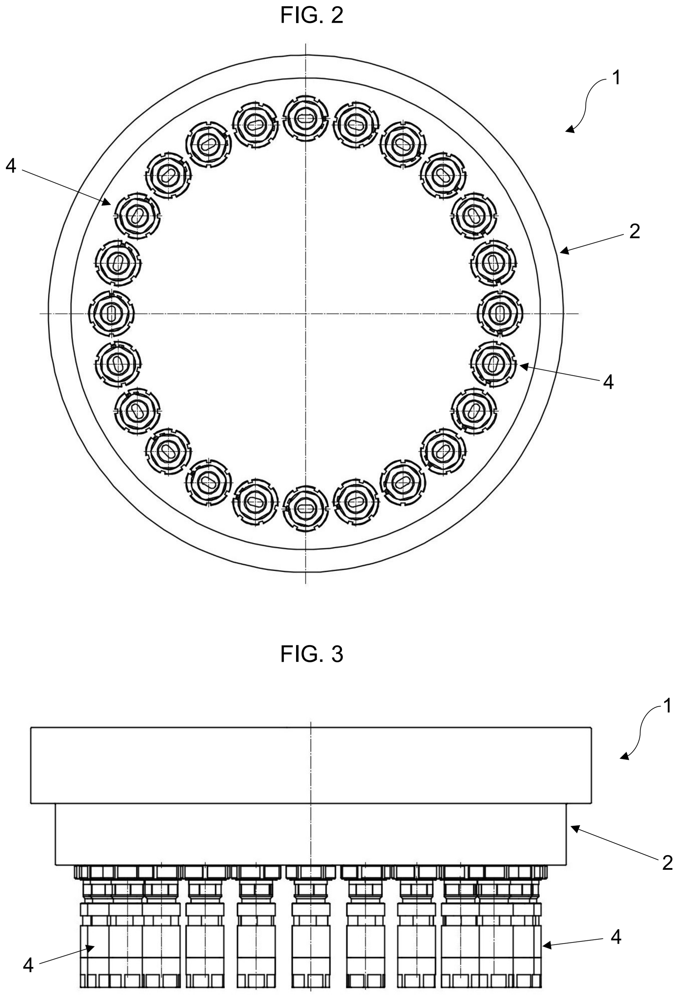

According to the embodiment illustrated in figures 2-3, the plurality of through holes 3 is distributed in sequence on a circular line.

The figure illustrates by way of example 24 die inserts 4.

An extrusion plant 100 is also object of the present invention.

The extrusion plant 100 comprises a die 1 as described above.

The extrusion plant 100 comprises a feeding channel 101 for feeding the dough to the die 1. The feeding channel 101 is in communication with the through holes 3 of the die 1.

Preferably, the feeding channel 101 is in communication upstream with a kneading apparatus.

Preferably, the feeding channel 101 is obtained in a header of the extrusion plant 100.

A pasta, snacks or pet food production line is also object of the present invention.

The pasta, snacks or pet food production line comprises an extrusion plant 100 as described above.

The characteristics and the advantages of the die for the extrusion of a dough of food products such as pasta, snacks or pet food, according to the present invention, are clear.

In particular, adjustments may be carried out by an operator during the extrusion process, thus avoiding production downtimes.

Moreover, the possibility of adjusting each die insert independently allows the operator to act on the single die inserts which need a regulation, thus equalizing the speed of the output product.

Furthermore, the die achieves a higher quality of the final products and reduces the production scrapes.

In addition, the die is less bulky than the prior art solutions since the introduction of a regulation does not requires additional space. Thus, it may be integrated in pre-existing extrusion plants.

Moreover, the variable passage gap located in a feeding area for the die insert (upstream of the insert body) allows the technological characteristics of the output product not to be altered, but only to change its speed.

## Claims

1. A die (1) for the extrusion of a dough of food products such as pasta, snacks or pet food, comprising:
a die body (2) having at least one through hole (3) with a main development axis (M);
at least one die insert (4) partly accommodated in said at least one through hole (3);
said at least one die insert (4) comprising:
- a hollow insert body (41) having a longitudinal channel (42) developing through the insert body (41) from an inlet (42a) to an outlet (42b);
- a head portion (411) integrally fixed to the insert body (41) and located upstream of the insert body (41) with respect to an advancing direction of the dough, the head portion (411) being arranged in said at least one through hole (3),
**characterized in that** said at least one die insert (4) is adjustable in position along a direction substantially parallel to the main development axis (M), and **in that** said head portion (411) is configurable in at least a first position in which it is distanced from internal walls (21) of the die body (2) delimiting the through hole (3) and thus a gap (5) is obtained between the head portion (411) and the internal walls (21), and a second position in which the head portion (411) abuts the internal walls (21) of the die body (2), leading to a change in the flow of product into the die insert (4).

2. The die (1) according to claim 1, wherein said at least one die insert (4) is adjustable in position by means of a tool operated by an operator.

3. The die (1) according to claim 1 or 2, wherein said at least one die insert (4) is screwed in the through hole (3) and is adjustable in position by screwing/unscrewing it.

4. The die (1) according to any one of the preceding claims, comprising locking means (6) for locking said at least one die insert (4) in position, said locking means (6) being configurable in at least an operating position in which they prevent the adjustment of the die insert (4) along a direction substantially parallel to the main development axis (M), and a rest position in which they are disengaged from the die insert (4) and allow said adjustment.

5. The die (1) according to any one of the preceding claims, wherein the locking means (6) comprises a lock nut externally screwed to the insert body (41).

6. The die (1) according to any one of the preceding claims, wherein said at least one die insert (4) is adjustable in a first limit position in which the gap (5) reaches its maximum value, said at least one die insert (4) comprising a stop ring (7) externally fixed to the insert body (41) so that, in the first limit position, it abuts a fixed component of the die (1).

7. The die (1) according to any one of the preceding claims, wherein the head portion (411) comprises an upper surface (411a) which develops with a sloping from the middle towards the border.

8. The die (1) according to any one of the preceding claims, wherein the head portion (411) comprises a lateral surface (411b) having convergent development in a direction towards the insert body (41).

9. An extrusion plant (100), comprising:
a die (1) according to any one of the preceding claims;
a feeding channel (101) for feeding the dough to the die (1).

10. A pasta, snacks or pet food production line, comprising an extrusion plant (100) according to claim 9.
